# EUROPÄISCHE PATENTSCHRIFT

(11) **EP 3 427 352 B1**
(45) Veröffentlichungstag und Bekanntmachung des Hinweises auf die Patenterteilung: **08.07.2020**
(21) Anmeldenummer: 16819857.0
(22) Anmeldetag: 15.12.2016
(51) Int. Cl.: H02K 11/35, H02K 13/00, H01R 39/08, H01R 43/14

(54) **SCHLEIFRINGÜBERTRAGER FÜR RUNDLÄUFERMASCHINEN**
SLIP-RING TRANSMITTER FOR ROTARY-TABLE MACHINES
TRANSMETTEUR À BAGUE COLLECTRICE POUR MACHINES À PLATEAUX TOURNANTS

(30) Priorität: 08.03.2016 DE 102016203762
(43) Veröffentlichungstag der Anmeldung: 16.01.2019
(73) Patentinhaber: Krones AG, 93073 Neutraubling (DE)
(72) Erfinder: SIXT, Robert, 93073 Neutraubling (DE); KUMAR, Rohit, 93073 Neutraubling (DE)
(74) Vertreter: Grünecker Patent- und Rechtsanwälte PartG mbB
(86) Internationale Anmeldenummer: PCT/EP2016/081261
(87) Internationale Veröffentlichungsnummer: WO 2017/153015

(56) Entgegenhaltungen:
- EP-A1- 2 146 402
- US-A- 2 623 188
- US-A1- 2001 033 117
- US-A1- 2004 130 230

## Beschreibung

Die Erfindung betrifft einen Schleifringübertrager zur elektrischen Verbindung von Baugruppen von Rundläufermaschinen gemäß dem Oberbegriff des Anspruchs 1 und eine Rundläufermaschine mit dem erfindungsgemäßen Schleifringübertrager.

Für die Herstellung von Kunststoffflaschen und für die Verarbeitung von Kunststoffflaschen und Glasflaschen, beispielsweise durch Inspizieren, Etikettieren und/oder Befüllen, in Abfüllanlagen kommen bekanntermaßen Rundläufermaschinen mit wenigstens einer feststehenden Baugruppe und wenigstens einer rotierenden Baugruppe zum Einsatz. Für die Übertragung elektrischer Signale, wie beispielsweise Steuersignale, und Daten, und für die Übertragung elektrischer Leistung zur Versorgung von Verbrauchern in den rotierenden Baugruppen werden Schleifringübertrager verwendet. Der Schleifringübertrager umfasst dann einen zentralen Schleifring mit einem Signalteil, in dem Schleifbahnen zur Übertragung elektrischer Signale und/oder Daten ausgebildet sind, sowie mit einem Leistungsteil, in dem Schleifbahnen zur Übertragung elektrischer Versorgungsleistung ausgebildet sind. Ferner umfasst der Schleifringübertrager zugehörige Bürsten zur Kontaktierung der einzelnen Schleifbahnen.

Für die Übertragung elektrischer Signale und Daten werden als Kontaktwerkstoffe bürstenseitig meist Gold- oder Silberlegierungen verwendet. Durch galvanische Verbindung mit dem Schleifring ergibt sich eine hohe elektrische Leitfähigkeit, geringer Abrieb und eine hohe Oxidationsbeständigkeit. Allerdings müssen Kontaktpaare aus Gold- oder Silberlegierungen aufgrund der Sprödheit des Materials und der an den Kontaktflächen verursachten Reibung in der Regel mit einem dünnen Ölfilm geschmiert werden. Menge und Typ des Öls sind speziell auf die Kontaktmaterialien abzustimmen.

Für die Übertragung elektrischer Leistung eignen sich vorrangig Bürsten aus gesintertem Graphit und Schleifbahnen aus Messing oder Kupfer sowie aus vergoldetem oder versilbertem Messing. Bürsten aus Graphit sind in der Anschaffung günstiger als Bürsten aus Gold- oder Silberlegierungen und eignen sich insbesondere für die Übertragung größerer elektrischer Leistungen. Allerdings entstehen Probleme mit Graphitbürsten durch den Einfluss von Temperatur und Luftfeuchtigkeit, durch Staubentwicklung, Abrieb oder Abbrand, sowie durch einen relativ hohen Verschleiß und damit einen entsprechend hohen Wartungsaufwand.

Da in Rundläufermaschinen von Getränkeabfüllanlagen in der Regel vergleichsweise geringe elektrische Versorgungsleistungen in rotierende Baugruppen zu übertragen sind, werden darin meist Schleifringübertrager mit Schleifbahnen und Bürsten aus Gold- oder Silberlegierungen bevorzugt. Für einen höheren Leistungsbedarf können einzelne Schleifbahnen durch Verbreitern skaliert werden.

Deutlich problematischer ist jedoch der Signalteil, da elektrische Signale und Daten mit vergleichsweise großer Geschwindigkeit zuverlässig übertragen werden müssen. Aufgrund vergleichsweise geringer Fehlertoleranz üblicher digitaler Übertragungsprotokolle können bereits geringe Vibrationen in den Rundläufermaschinen eine kurzzeitige Unterbrechung der galvanischen Verbindung zwischen Bürste und Schleifbahn verursachen. Zudem kann die Qualität der Kontaktierung einzelner Signalspuren durch unzureichende Schmierung, Verschmutzung und/oder Oxidation der Kontaktpaare so beeinträchtigt sein, dass es zu einer Unterbrechung der Signalübertragung kommt. Zudem sind die Anforderungen an die mechanische Stabilität von Gehäusen und Lagern sowie an eine insbesondere torsionsfreie Montage der Kontaktpaare vergleichsweise hoch.

Da aus fertigungstechnischen Gründen bisher im Signalteil und im Leistungsteil identische Kontaktmaterialien Verwendung finden, wird die Lebensdauer derartiger Schleifringübertrager durch die bevorzugte Materialkombination Gold/Gold oder Silber/Silber auf etwa 40 Millionen Umdrehungen begrenzt. Danach ist eine Reparatur in der Regel unwirtschaftlich und ein Austausch des Stators und des Rotors nötig.

Es besteht daher der Bedarf für einen Schleifringübertrager, der sich sowohl zuverlässiger für die Signalübertragung einsetzen lässt als auch im Langzeitbetrieb wirtschaftlicher ist.

Relevanter Stand der Technik für die vorliegende Erfindung ist in Dokumente US2004130230A1, US2623188A, US2001033117A1 und EP2146402A1 offenbart.

Die gestellte Aufgabe wird mit einem Schleifringübertrager gemäß Anspruch 1 gelöst. Der Schleifringübertrager eignet sich zur elektrischen Verbindung von Baugruppen von Rundläufermaschinen. Derartige Baugruppen umfassen beispielsweise elektrisch betriebene und/oder gesteuerte Motoren, Sensoren, Steuereinheiten, Spannungsversorgungen oder dergleichen. Der Schleifringübertrager umfasst einen Schleifring mit einem Signalteil zur Übertragung von Signalen und/oder Daten und einen Leistungsteil zur Übertragung elektrischer Versorgungsleistung. Erfindungsgemäß ist der Signalteil vom Leistungsteil modular ablösbar, insbesondere axial abziehbar, ausgebildet. Erfindungsgemäß lässt sich der Signalteil bei eingebautem Leistungsteil ablösen. Somit kann das Signalteil unabhängig vom Leistungsteil gewartet oder ausgetauscht werden.

Der Schleifringübertrager umfasst definitionsgemäß einen zentralen Schleifring und damit korrespondierende Bürsten und/oder kontaktlos arbeitende Übertragungselemente. Der Schleifring umfasst mehrere Schleifbahnen oder dergleichen Ringspuren sowie elektrische Anschlüsse zum Verbinden der Schleifbahnen / Ringspuren mit Verbindungskabeln. Die Bürsten sind beispielsweise auf wenigstens einem Bürstenblock gruppiert. Die Bürsten sind zudem von einem Gehäuse umgeben, in dem der Schleifring drehbar gelagert ist.

Der Schleifringübertrager dient vorzugsweise der Verbindung von stationären Baugruppen mit an einem Karussell rotierenden Baugruppen.

Der Signalteil und der Leistungsteil können in axialer Richtung miteinander arretierbar ausgebildet sein, beispielsweise durch einen lösbaren Kraftschluss und/oder Formschluss. Signalteil und Leistungsteil sind im Arbeitsbetrieb vorzugsweise durch Formschluss verdrehfest aneinander gekoppelt.

Der Signalteil und der Leistungsteil können auf einer gemeinsamen Welle oder dergleichen Tragkörper sitzen. Durch den Signalteil und den Leistungsteil kann ein zentraler Kanal, beispielsweise zur Medienversorgung, verlaufen.

Vorzugsweise ist der Leistungsteil für die kontaktierende Übertragung und der Signalteil für die kontaktlose Übertragung ausgebildet. Die kontaktlose Übertragung im Signalteil ist vergleichsweise störungsresistent und im Wesentlichen verschleißfrei. Ferner können Schleifbahnen und Bürsten des Leistungsteils dann weitgehend unabhängig vom Signalteil optimiert werden.

Vorzugsweise ist der Signalteil für eine optische, kapazitive und/oder induktive Signalübertragung ausgebildet. Eine optische Signalübertragung eignet sich insbesondere für hohe Datenraten bis zu 8 Gbit/s und ist unempfindlich gegenüber elektromagnetischer Interferenz. Optische Signalübertragung eignet sich insbesondere zum Anschluss an Lichtwellenleiter.

Eine kapazitive Signalübertragung ermöglicht hohe Datenraten von bis zu 8 Gbit/s bei großer Zuverlässigkeit sowie geringer Bitfehlerrate. Die kapazitive Signalübertragung ist zudem störsicher gegenüber elektromagnetischer Interferenz.

Eine induktive Übertragung eignet sich besonders für die Signalübertragung und die Übertragung elektrischer Versorgungsleistung. Eine induktive Signalübertragung bietet somit zusätzliche Flexibilität hinsichtlich einer Belegung einzelner kontaktloser Übertragungsspuren.

Vorzugsweise umfasst der Schleifring Steckkontakte zum elektrischen Anschließen des Signalteils mittels des Leistungsteils. Somit kann die elektrische Verbindung zum Schleifring durch Abziehen des Signalteils vom Leistungsteil gelöst werden und durch einfaches Aufstecken wieder hergestellt werden.

Für eine optische Signalübertragung kann zudem wenigstens ein optischer Steckkontakt zum Anschließen des Signalteils am Schleifring ausgebildet sein. Dadurch werden Wartung und/oder Austausch des Signalteils vereinfacht.

Vorzugsweise umfasst der Schleifringübertrager ferner ein Gehäuse mit einer Revisionsöffnung zum Hindurchführen des Signalteils. Dies erleichtert die Instandhaltung zusätzlich.

Vorzugsweise umfasst der Schleifringübertrager ferner einen Bürstenblock mit Bürsten zum Kontaktieren des Leistungsteils. Insbesondere Bürsten mit einem überwiegenden Graphitanteil sind selbstschmierend, langlebig und für die Übertragung von elektrischer Versorgungsleistung besonders geeignet.

Vorzugsweise umfasst der Schleifringübertrager ferner ein Gehäuse mit Revisionsöffnungen zum Austausch der Bürsten. Dadurch lässt sich die Wartung des Schleifringübertragers im eingebauten Zustand vereinfachen. Vorzugsweise sind einander entgegengesetzt am Gehäuse angeordnete Revisionsöffnungen für zugeordnete Bürstenblöcke ausgebildet.

Vorzugsweise sind an den Bürsten elektrisch und/oder optisch detektierbare Verschleißindikatoren ausgebildet. Die Verschleißindikatoren können beispielsweise als elektrische Kontakte ausgebildet sein, als optische Reflexionsstreifen oder dergleichen. Damit können Wartungsintervalle verlängert, ein vorzeitiger Verschleiß der Schleifbahnen vermieden und die Überwachung per Ferndiagnose durchgeführt werden.

Vorzugsweise umfasst der Leistungsteil Schleifbahnen aus Messing. Messing ist vergleichsweise verschleißarm und eignet sich insbesondere für eine Kombination mit Garphitbürsten. Vorzugsweise ist hierbei die Kontaktfläche der Schleifbahnen aus Messing ausgebildet. Es wäre aber auch denkbar, derartige Schleifbahnen aus Messing mit einer Goldlegierung oder einer Silberlegierung zu beschichten.

Vorzugsweise umfasst der Schleifringübertrager ferner ein Gehäuse mit einer Trennwand zum Graphitstaub zurückhaltenden, insbesondere hermetisch dichten Abschirmen des Signalteils vom Leistungsteil. Dadurch lässt sich eine Verschmutzung und dadurch verursachte Wartung des Signalteils vermeiden. Entsprechend lässt sich Graphitabrieb auf einen den Leistungsteil umgebenden Gehäuseabschnitt begrenzen.

Die Trennwand oder das Außengehäuse kann beispielsweise einen luftdurchlässigen Filter umfassen, der für Graphitstaub undurchlässig ist. Dadurch wird ein Druckaustausch und/oder Gasaustausch ermöglicht, um einer Kondenswasserbildung im Gehäuseinneren entgegenzuwirken. Bei einer hermetischen Abdichtung des Leistungsteils vom Signalteil ist eine Verschmutzung des Signalteils durch Graphitabrieb oder dergleichen ausgeschlossen.

Vorzugsweise umfasst der Schleifringübertrager ferner ein Gehäuse und eine Absaugung zum Absaugen von Staub, insbesondere Graphitstaub, aus einem den Leistungsteil umgebenden Gehäuseabschnitt. Dies ermöglicht eine einfache Reinhaltung des Leistungsteils beziehungsweise des zugehörigen Gehäuseabschnitts bei eingebautem Schleifringübertrager.

Vorzugsweise umfasst der Schleifringübertrager ferner ein Gehäuse mit modularen, insbesondere modular stapelbaren Gehäuseabschnitten für den Signalteil und den Leistungsteil. Dies ermöglicht eine wirtschaftliche Anpassung des Schleifringübertragers an die in der jeweiligen Rundläufermaschine zu übertragenden Signalen und/oder Daten sowie elektrischer Versorgungsleistung.

Vorzugsweise umfasst der Leistungsteil modular aufeinander stapelbare Isolatorsegmente und Schleifringsegmente mit Schleifbahnen. Der Leistungsteil kann dann hinsichtlich der Anzahl und Größe seiner Schleifbahnen flexibel an die zu übertragende Versorgungsleistung für einzelne Verbraucher der Rundläufermaschine angepasst werden.

Vorzugsweise lassen sich die Schleifringsegmente mit einander in axialer Richtung berührenden Schleifbahnen stapeln. Mehrere Schleifbahnen sind zur Leistungsskalierung dann zu einer breiteren Schleifbahn kombinierbar. Dadurch lässt sich die Breite der Schleifbahnen flexibel an die zu übertragende Versorgungsleistung anpassen.

Die gestellte Aufgabe wird ebenso mit einer Rundläufermaschine zum Herstellen, Füllen, Verschließen, Etikettieren, Bedrucken, Reinigen und/oder Inspizieren von Behältern, insbesondere Flaschen, gelöst, wobei die Rundläufermaschine einen Schleifringübertrager nach wenigstens einer der vorstehend beschriebenen Ausführungsformen umfasst. Dadurch können stationäre Baugruppen der Rundläufermaschine und rotierende Baugruppen der Rundläufermaschine zur zuverlässigen Übertragung von Signalen und zur Übertragung von Daten mit hoher Datenrate verbunden werden, ebenso zum Bereitstellen einer elektrischen Versorgungsleistung für die in rotierenden Baugruppen vorhandenen elektrischen Verbraucher.

Vorzugsweise lässt sich der Signalteil dann bei einem in die Rundläufermaschine eingebautem Leistungsteil austauschen. Dadurch wird die Instandhaltung der Rundläufermaschine vereinfacht.

Eine bevorzugte Ausführungsform der Erfindung ist in den Zeichnungen dargestellt. Es zeigen:
- Figur 1: eine schematische Teilansicht einer Rundläufermaschine mit einem Schleifringübertrager;
- Figur 2: eine schematische Teilansicht des Schleifringübertragers mit modularem Aufbau des Leistungsteils; und
- Figur 3: eine schematische Ansicht eines Bürstenblocks mit einem Verschleißsensor.

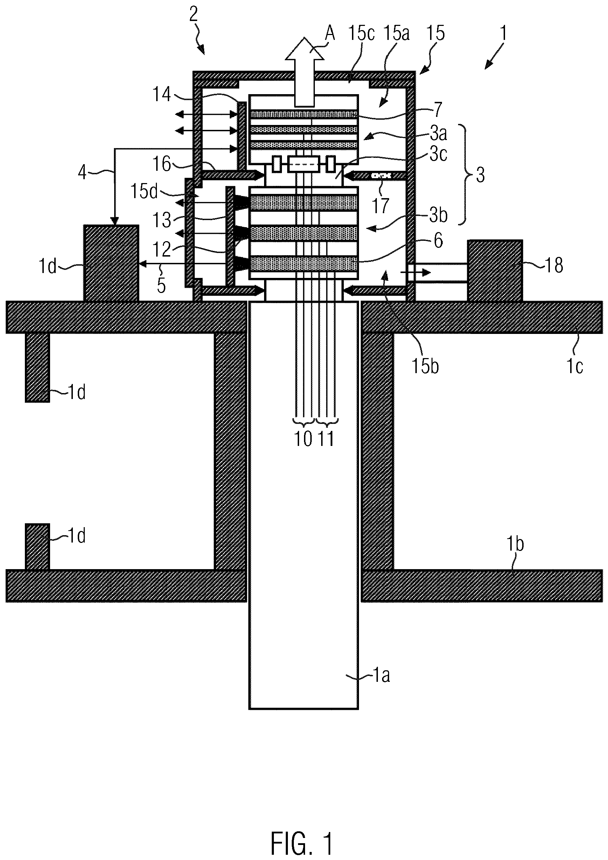

Wie die Figur 1 in einer schematischen Teilansicht einer Rundläufermaschine 1 erkennen lässt, umfasst der erfindungsgemäße Schleifringübertrager 2 einen Schleifring 3 mit einem Signalteil 3a zur Übertragung von Signalen und/oder Daten 4 und mit einem Leistungsteil 3b zur Übertragung elektrischer Versorgungsleistung 5.

Der Signalteil 3a und der Leistungsteil 3b sind als voneinander lösbare Module ausgebildet. Insbesondere ist der Signalteil 3a von dem im Schleifringübertrager 2 eingebauten Leistungsteil 3b ablösbar, beispielsweise für Instandhaltungsmaßnahmen. Der Signalteil 3a ist hierzu vorzugsweise in axialer Richtung A vom Leistungsteil 3b abziehbar.

Der Leistungsteil 3b umfasst Schleifbahnen 6, die beispielsweise Kontaktflächen aus Messing, einer Goldlegierung oder einer Silberlegierung aufweisen. Der Signalteil 3a umfasst Ringspuren 7, die vorzugsweise zur kontaktlosen Übertragung von Signalen und/oder Daten 4 mittels kapazitiver, optischer oder induktiver Ankopplung ausgebildet sind. In der Figur 1 sind der Einfachheit halber beispielhaft drei Schleifbahnen 6 und drei Ringspuren 7 schematisch dargestellt.

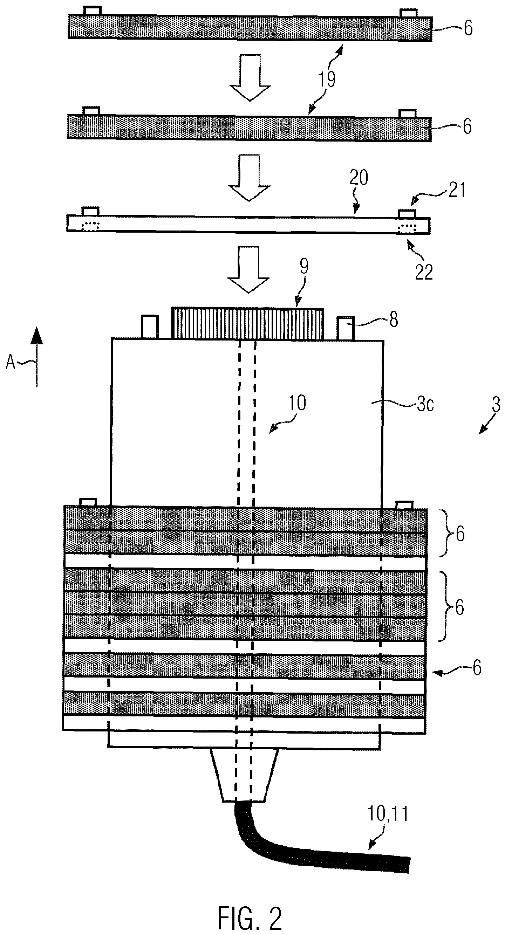

Wie insbesondere die Figur 2 im vergrößerten Maßstab erkennen lässt, umfasst der Schleifring 3 vorzugsweise mechanische Kopplungselemente 8 zum drehfesten Verbinden des Signalteils 3a mit dem Leistungsteil 3b.

Ferner umfasst der Schleifring 3 vorzugsweise elektrische Steckkontakte 9 zum elektrischen Verbinden der Ringspuren 7 des Signalteils 3a mit Signal- und/oder Datenleitungen 10, die beispielsweise im Leistungsteil 3b verlaufen. Im Leistungsteil 3b verlaufen ferner elektrische Versorgungsleitungen 11 bis zu den Schleifspuren 6, siehe die Figur 1.

Auch elektrische Versorgungsleistung 5 für den Signalteil 3a wird durch den Leistungsteil 3b übertragen. Dazu wird wenigstens eine zugeordnete Schleifbahn 6 im Leistungsteil 3b abgegriffen.

Die elektrischen Steckkontakte 9 sind so ausgebildet, dass die elektrische Verbindung zwischen den Ringspuren 7 und den Signal- und/oder Datenleitungen 10 durch das Abziehen des Signalteils 3a vom Leistungsteil 3b getrennt wird und beim Aufsetzen des Signalteils 3a auf das Leistungsteil 3b hergestellt wird.

In der beispielhaft dargestellten Rundläufermaschine 1 ist der Schleifring 3 als statische Komponente des Schleifringübertragers 2 ausgebildet und zu diesem Zweck auf einer feststehenden Hauptsäule 1a der Rundläufermaschine 1 befestigt. Folgende um die Hauptsäule 1a rotierenden Maschinenkomponenten der Rundläufermaschine 1 sind der Übersichtlichkeit halber in der Figur 1 mit schräger Schraffur dargestellt: ein rotierender Behältertisch 1b, ein mit diesem fest verbundenes oberes Maschinenteil 1c sowie daran umlaufende elektrisch aktive Maschinenkomponenten 1d.

Am rotierenden oberen Maschinenteil 1c sind mit diesem rotierende Schleifkontakte bzw. Bürsten 12 ausgebildet, die eine Übertragung elektrischer Versorgungsleistung 5 im Kontakt mit dem zugehörigen Schleifbahnen 6 herstellen. Die Bürsten 12 sind vorzugsweie aus Graphit, einer Graphit-Metall-Mischung, einem Graphit-Sintermaterial oder dergleichen. Denkbar sind jedoch auch Bürsten 12 mit Kontaktflächen aus einer Goldlegierung oder einer Silberlegierung.

Die Bürsten 12 oder dergleichen Schleifkontakte sind vorzugsweise auf wenigstens einem Bürstenblock 13 befestigt. Die Bürsten 12 lassen sich vorzugsweise durch Demontage des zugehörigen Bürstenblocks 13 austauschen.

Die Übertragung von Signalen und/oder Daten 4 im Signalteil 3a erfolgt vorzugsweise kontaktlos zwischen den Ringspuren 7 und einer beispielsweise kapazitiv oder optisch arbeitenden Übertragungseinrichtung 14. Diese ist verdrehfest mit dem oberen Maschinenteil 1c verbunden. Die Übertragungseinrichtung 14 ermöglicht vorzugsweise einen bidirektionalen Austausch von Signalen und/oder Daten 4.

Der Schleifringübertrager 2 umfasst ferner ein Gehäuse 15, das vorzugsweise in einen oberen Gehäuseabschnitt 15a zur Aufnahme des Signalteils 3a und einen unteren Gehäuseabschnitt 15b zur Aufnahme des Leistungsteils 3b unterteilt ist. Zu diesem Zweck ist vorzugsweise eine Trennwand 16 zwischen dem oberen Gehäuseabschnitt 15a und dem unteren Gehäuseabschnitt 15b ausgebildet. Das Gehäuse 15 könnte auch modular aus dem oberen Gehäuseabschnitt 15a und dem unteren Gehäuseabschnitt 15b zusammengesetzt sein.

Das Gehäuse 15 umfasst vorzugsweise eine mit einem Deckel verschließbare Revisionsöffnung 15c, die einen Zugang zum Signalteil 3a für Instandhaltungsmaßnahmen ermöglicht. Der Signalteil 3a lässt sich insbesondere durch die Revisionsöffnung 15c hindurch vom Leistungsteil 3b in axialer Richtung A ablösen und entnehmen.

Das Gehäuse 15 umfasst vorzugsweise wenigstens eine mit einem Deckel verschließbare Revisionsöffnung 15d, die einen Zugang zu den Bürsten 12 für Instandhaltungsmaßnahmen ermöglicht.

Die Trennwand 16 kann beispielsweise hermetisch abdichtend ausgebildet sein, um einen Gasaustausch zwischen dem oberen Gehäuseabschnitt 15a und dem unteren Gehäuseabschnitt 15b zu verhindern. Alternativ kann in der Trennwand 16 ein Staubfilter 17 ausgebildet sein, das einen Gasaustausch zwischen dem oberen Gehäuseabschnitt 15a und dem unteren Gehäuseabschnitt 15b ermöglicht, jedoch für Staub, insbesondere für Graphitstaub, undurchlässig ist. In beiden Fällen wird eine Verschmutzung des Signalteils 3a durch Graphitabrieb im Leistungsteil 3b verhindert. Dadurch lässt sich insbesondere verhindern, dass die Ringspuren 7 und/oder die Übertragungseinrichtung 14 mit Graphitstaub verschmutzt werden. Die Übertragung von Signalen und/oder Daten 4 ist dann besonders zuverlässig.

Alternativ oder ergänzend zur abdichtenden Trennwand 16 kann eine Absaugung 18 für den unteren Gehäuseabschnitt 15b vorhanden sein. Eine derartige Absaugung 18 kann sowohl kontinuierlich als auch intermittierend betrieben werden, um durch Abrieb der Bürsten 12 verursachten Graphitstaub oder dergleichen abzusaugen und vom Signalteil 3a fern zu halten.

Die Abdichtung der mit dem oberen Maschinenteil 1c mitrotierenden Komponenten des Schleifringübertragers 2 gegenüber dem Schleifring 3 kann auf herkömmliche Weise durch Dichtlippen oder dergleichen gegenüber einem zentralen Tragkörper 3c des Schleifrings 3 erfolgen, wie dies in der Figur 1 schematisch angedeutet ist. Gegebenenfalls vorhandene Lager zwischen dem Schleifring 3 und dem Gehäuse 15 sind der Einfachheit halber nicht dargestellt.

Die Bürsten 12 sind mittels (durch Pfeile symbolisierter) Verbindungsleitungen und/oder drahtlos mit aktiven Maschinenkomponenten 1d verbunden, die auf dem Behältertisch 1b oder dem oberen Maschinenteil 1c mitrotieren. Die aktiven Maschinenkomponenten 1d werden elektrisch versorgt und gesteuert und sind beispielsweise Drehteller, Hubantriebe für Zentrierglocken, Steuereinheiten oder dergleichen.

Die Ringspuren 7 sind mittels der Übertragungseinrichtung 14 und (durch Pfeile symbolisierter) Verbindungsleitungen und/oder drahtlos zum Austausch von Signalen und/oder Daten 4 mit den Maschinenkomponenten 1d verbunden.

Die Anzahl der Schleifbahnen 6 und der Ringspuren 7 sowie der zugehörigen Verbindungsleitungen 10, 11 ist lediglich beispielhaft dargestellt und richtet sich nach der Anzahl der umlaufenden aktiven Komponenten 1d und der Anzahl der jeweils benötigten Verbindungen für elektrische Versorgungsleistung 5 und für den Austausch von Signalen und/oder Daten 4.

Auch die Anzahl der Bürsten 12 und deren Verteilung auf gegebenenfalls mehrere Bürstenblöcke 13 sind lediglich beispielhaft dargestellt. Beispielsweise können zwei paarweise auf je einer Schleifbahn 6 laufende Bürsten 12 vorhanden sein, um die Übertragung elektrischer Versorgungsleistung zu verbessern. Ebenso sind Bürstenblöcke 13 und zugehörige Revisionsöffnungen 15d vorzugsweise aufeinander entgegengesetzten Seiten des Gehäuses 15 ausgebildet. Es lassen sich dann gegebenenfalls mehr Schleifbahnen 6 auf dem Schleifring 3 anordnen.

Wie die Figur 2 diesbezüglich verdeutlicht, kann der Schleifring 3 modular ausgebildet sein. Beispielsweise sind dann insbesondere ringförmige Schleifbahnsegmente 19 mit Schleifbahnen 6 und insbesondere ringförmige Isolatorsegmente 20 vorhanden, die vorzugsweise in beliebiger Reihenfolge aufeinander gestapelt werden können, insbesondere um den zentralen Tragkörper 3c.

Hierbei lassen sich Schleifbahnsegmente 19 und Isolatorsegmente 20 abwechselnd aufeinander stapeln, um voneinander isolierte Schleifbahnen 6 auszubilden. Ebenso lassen sich Schleifbahnsegmente 19 direkt aufeinander stapeln, um Schleifbahnen 6 unterschiedlicher Breite für eine Leistungsskalierung der Schleifbahnen 6 durchführen.

Für ein drehfestes Stapeln der Schleifbahnsegmente 19 und Isolatorsegmente 20 können an diesen und/oder am zentralen Tragkörper 3c miteinander formschlüssig korrespondierende Erhebungen 21 und Ausnehmungen 22 oder dergleichen ausgebildet sein.

Wird ein Defekt am Signalteil 3a festgestellt und/oder ist ein vorgegebenes Instandhaltungsintervall einzuhalten, kann der Signalteil 3a durch die Revisionsöffnung 15c auf einfache Weise von Bedienpersonal erreicht werden. Der Signalteil 3a kann durch Lösen einer herkömmlichen, beispielsweise formschlüssigen und/oder kraftschlüssigen Sicherung (nicht dargestellt) in axialer Richtung A von dem Leistungsteil 3b nach oben abgezogen werden. Der Signalteil 3a kann dann auf einfache Weise inspiziert werden und/oder bei Bedarf durch einen funktionstüchtigen Signalteil 3a ersetzt werden. Insbesondere kontaktlos arbeitende Signalteile 3a lassen sich ohne zusätzliche Trennung von am Gehäuse 15 befestigten Bürsten oder dergleichen von dem Leistungsteil 3b abziehen.

Es wäre allerdings auch denkbar, den Signalteil 3a kontaktierend in Analogie zum Leistungsteil 3b auszubilden. In diesem Falle sind im Signalteil 3a Materialpaarungen aus Goldlegierungen oder Silberlegierungen vorteilhaft. Beispielsweise können die Ringspuren 7 eine Kontaktfläche aus einer Goldlegierung aufweisen und die Schleifkontakte als Goldfederdrähte oder Goldnieten ausgebildet sein. Alternativ könnten die Ringspuren 7 eine Kontaktfläche aus einer Silberlegierung aufweisen und die Schleifkontakte als Silberbandbürsten ausgebildet sein.

In jedem Fall ermöglicht die modulare Ausbildung des Signalteils 3a ein separates Ablösen vom Leistungsteil 3b und damit eine vereinfachte Instandhaltung des Schleifringübertragers 2.

Die Auswahl des Werkstoffes für die Bürsten 12 richtet sich nach den Einsatzbedingungen, wie beispielsweise dem spezifiziertem Temperaturbereich, der spezifizierten Luftfeuchtigkeit, einer geforderten Standfestigkeit, einem zugelassenen Abrieb oder dergleichen. Dies gilt zumindest für den Leistungsteil 3b und gegebenenfalls auch für einen kontaktierend arbeitenden Signalteil 3a.

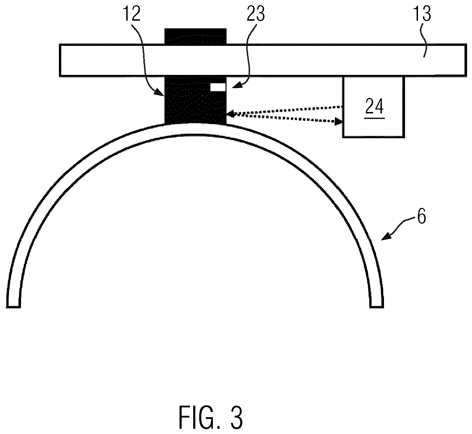

Zusätzlich kann an den Bürsten 12 ein elektrisch und/oder optisch detektierbarer Verschleißindikator 23 ausgebildet sein. Dieser ist in der Figur 3 beispielhaft und schematisch als optisch detektierbarer Reflexstreifen dargestellt. Es ist dann im Bereich der Bürsten 12 ein entsprechender Sensor 24 vorhanden, im Beispiel der Figur 3 in Form einer Reflexionslichtschranke. Damit lässt sich der Abnutzungsgrad der Bürsten 12 überwachen. Dadurch kann einem vorzeitigen Verschleiß der Schleifbahnen 6 vorgebeugt werden und/oder ein Instandhaltungsintervall für den Austausch der Bürsten 12 bedarfsgerecht durch Ferndiagnose maximiert werden.

Der Schleifringübertrager 2 ist in der gezeigten Ausführungsform mit einem statischen Schleifring 3 und einem sich demgegenüber um den Schleifring 3 drehenden Gehäuse 15 mit Bürsten 12 und einer Übertragungseinrichtung 14 dargestellt. Der Schleifringübertrager 2 ließe sich jedoch auch bei sich drehendem Schleifring 3 und demgegenüber feststehenden Bürsten 12 und feststehender Übertragungseinrichtung 14 einsetzen. Ebenso könnten der Schleifring 3 und die Bürsten 12 bzw. Übertragungseinrichtung 14 relativ zueinander in eine beliebige Drehbewegung zueinander versetzt werden.

## Patentansprüche

1. Schleifringübertrager (2) zur elektrischen Verbindung von Baugruppen von Rundläufermaschinen (1), umfassend einen Schleifring (3) mit einem Signalteil (3a) zur Übertragung von Signalen und/oder Daten (4) und einen Leistungsteil (3b) zur Übertragung elektrischer Versorgungleistung (5), **dadurch gekennzeichnet, dass** der Signalteil vom Leistungsteil bei eingebautem Leistungsteil modular ablösbar und axial abziehbar, ausgebildet ist.

2. Schleifringübertrager nach Anspruch 1, wobei der Leistungsteil (3b) für die kontaktierende Übertragung und der Signalteil (3a) für die kontaktlose Übertragung ausgebildet sind.

3. Schleifringübertrager nach Anspruch 1 oder 2, wobei der Signalteil (3a) für eine optische, induktive und/oder kapazitive Signalübertragung ausgebildet ist.

4. Schleifringübertrager nach einem der vorigen Ansprüche, wobei der Schleifring (3) Stecckontakte (9) zum elektrischen Anschließen des Signalteils (3a) mittels des Leistungsteils (3b) umfasst.

5. Schleifringübertrager nach wenigstens einem der vorigen Ansprüche, ferner umfassend ein Gehäuse (15) mit wenigstens einer Revisionsöffnung (15c) zum Hindurchführen des Leistungsteils (3a).

6. Schleifringübertrager nach wenigstens einem der vorigen Ansprüche, ferner umfassend einen Bürstenblock (13) mit Bürsten (12) zum Kontaktieren des Leistungsteils (3b).

7. Schleifringübertrager nach Anspruch 6, ferner umfassend ein Gehäuse (15) mit wenigstens einer Revisionsöffnung (15d) zum Austausch der Bürsten (12).

8. Schleifringübertrager nach Anspruch 6 oder 7, wobei an den Bürsten (12) elektrisch und/oder optisch detektierbare Verschleißindikatoren (23) ausgebildet sind.

9. Schleifringübertrager nach einem der Ansprüche 6 bis 8, wobei der Leistungsteil (3b) Schleifbahnen (6) aus Messing umfasst.

10. Schleifringübertrager nach wenigstens einem der vorigen Ansprüche, ferner umfassend ein Gehäuse (15) mit einer Trennwand (16) zum Graphitstaub zurückhaltenden, insbesondere hermetisch dichten, Abschirmen des Signalteils (3a) vom Leistungsteil (3b).

11. Schleifringübertrager nach wenigstens einem der vorigen Ansprüche, ferner umfassend ein Gehäuse (15) und eine Absaugung (18) zum Absaugen von Staub, insbesondere Graphitstaub, aus einem den Leistungsteil (3b) umgebenden Gehäuseabschnitt (15b).

12. Schleifringübertrager nach wenigstens einem der vorigen Ansprüche, wobei der Leistungsteil (3b) modular aufeinander stapelbare Isolatorsegmente (19) und Schleifringsegmente (18) mit Schleifbahnen (6) umfasst.

13. Schleifringübertrager nach wenigstens einem der vorigen Ansprüche, wobei sich die Schleifringsegmente (18) mit einander axial berührenden Schleifbahnen (6) stapeln lassen.

14. Rundläufermaschine (1) zum Herstellen, Füllen, Verschließen, Etikettieren, Bedrucken, Reinigen und/oder Inspizieren von Behältern, insbesondere Flaschen, mit einem Schleifringübertrager (2) nach wenigstens einem der vorigen Ansprüche.

15. Rundläufermaschine nach Anspruch 14, wobei sich der Signalteil (3a) bei in die Rundläufermaschine (1) eingebautem Leistungsteil (3b) austauschen lässt.

## Claims

1. Slip ring transmitter (2) for electrically connecting subassemblies of rotary-table machines (1), comprising a slip ring (3) with a signal part (3a) for transmitting signals and/or data (4) and a power part (3b) for transmitting electrical supply power (5), **characterized in that** in the installed state of the power part the signal part is configured to be detachable from the power part in modular fashion and in particular to be axially removable.

2. Slip ring transmitter according to claim 1, wherein the power part (3b) is designed for contact transmission and the signal part (3a) is designed for contactless transmission.

3. Slip ring transmitter according to claim 1 or 2, wherein the signal part (3a) is designed for optical, inductive and/or capacitive signal transmission.

4. Slip ring transmitter according to one of the previous claims, wherein the slip ring (3) comprises plug contacts (9) for electrically connecting the signal part (3a) by means of the power part (3b).

5. Slip ring transmitter according to at least one of the previous claims, further comprising a housing (15) with at least one inspection opening (15c) for passing the power part (3a) therethrough.

6. Slip ring transmitter according to at least one of the previous claims, further comprising a brush block (13) with brushes (12) for contacting the power part (3b).

7. Slip ring transmitter according to claim 6, further comprising a housing (15) with at least one inspection opening (15d) for replacing the brushes (12).

8. Slip ring transmitter according to claim 6 or 7, wherein electrically and/or optically detectable wear indicators (23) are formed on the brushes (12).

9. Slip ring transmitter according to one of claims 6 to 8, wherein the power section (3b) comprises slip tracks (6) made of brass.

10. Slip ring transmitter according to at least one of the previous claims, further comprising a housing (15) with a partition (16) for shielding the signal part (3a) from the power part (3b) in such a way that it retains, in particular hermetically seals, graphite dust.

11. Slip ring transmitter according to at least one of the previous claims, further comprising a housing (15) and a suction (18) for removing dust, in particular graphite dust, from a housing section (15b) surrounding the power part (3b).

12. Slip ring transmitter according to at least one of the previous claims, wherein the power part (3b) comprises insulator segments (19) which can be stacked modularly on one another and slip ring segments (18) with slip tracks (6).

13. Slip ring transmitter according to at least one of the previous claims, wherein the slip ring segments (18) can be stacked with slip tracks (6) axially contacting one another.

14. Rotary-table machine (1) for producing, filling, closing, labeling, printing, cleaning and/or inspecting containers, in particular bottles, with a slip ring transmitter (2) according to at least one of the previous claims.

15. Rotary-table machine according to claim 14, wherein the signal part (3a) can be exchanged when the power part (3b) is installed in the rotary-table machine (1).

## Revendications

1. Transmetteur à bague collectrice (2) pour le raccordement électrique d'ensembles de machines à plateaux tournants (1), comprenant une bague collectrice (3) avec une partie signal (3a) pour la transmission de signaux et/ou de données (4) et une partie puissance (3b) pour la transmission d'énergie d'alimentation électrique (5), **caractérisé en ce que** la partie signal peut être détachée de la partie puissance de manière modulaire et peut être retirée axialement lorsque la partie puissance est installée.

2. Transmetteur à bague collectrice selon la revendication 1, dans lequel la partie puissance (3b) est conçue pour une transmission par contact et la partie signal (3a) est conçue pour une transmission sans contact.

3. Transmetteur à bague collectrice selon les revendications 1 ou 2, dans lequel la partie signal (3a) est conçue pour la transmission de signaux optiques, inductifs et/ou capacitifs.

4. Transmetteur à bague collectrice selon l'une des revendications précédentes, dans lequel la bague collectrice (3) comprend des contacts enfichables (9) pour la connexion électrique de la partie signal (3a) au moyen de la partie puissance (3b).

5. Transmetteur à bague collectrice selon au moins une des revendications précédentes, comprenant en outre un boîtier (15) avec au moins une ouverture d'inspection (15c) pour le passage de la partie motrice (3a).

6. Transmetteur à bague collectrice selon au moins une des revendications précédentes, comprenant en outre un bloc de brosses (13) avec des brosses (12) pour le contact avec la partie puissance (3b).

7. Transmetteur à bague collectrice selon la revendication 6, comprenant en outre un boîtier (15) avec au moins une ouverture d'inspection (15d) pour le remplacement des brosses (12).

8. Transmetteur à bague collectrice selon les revendications 6 ou 7, dans lequel des indicateurs d'usure (23) détectables électriquement et/ou optiquement sont formés sur les brosses (12).

9. Transmetteur à bague collectrice selon l'une des revendications 6 à 8, dans lesquels la partie puissance (3b) comprend des pistes collectrices (6) en laiton.

10. Transmetteur à bague collectrice selon au moins l'une des revendications ci-dessus, comprenant en outre un boîtier (15) avec une cloison (16) pour protéger la partie signal (3a) de la partie puissance (3b) de telle sorte qu'elle retient, en particulier de manière hermétique, la poussière de graphite.

11. Transmetteur à bague collectrice selon au moins l'une des revendications ci-dessus, comprenant en outre un boîtier (15) et une aspiration (18) pour aspirer la poussière, en particulier la poussière de graphite, hors d'une section de boîtier (15b) entourant la partie puissance (3b).

12. Transmetteur à bague collectrice selon au moins l'une des revendications précédentes, dans lequel la partie puissance (3b) comprend des segments d'isolateur (19) qui peuvent être empilés de manière modulaire les uns sur les autres et des segments de bague collectrice (18) avec des pistes collectrices (6).

13. Transmetteur à bague collectrice selon au moins l'une des revendications ci-dessus, dans lequel les segments de bague collectrice (18) peuvent être empilés avec des pistes collectrices (6) en contact axial les unes avec les autres.

14. Machine à plateaux tournants (1) pour la production, le remplissage, la fermeture, l'étiquetage, l'impression, le frottement et/ou l'inspection de récipients, en particulier de bouteilles, avec un émetteur à bague collectrice (2) selon au moins une des exigences ci-dessus.

15. Machine à plateaux tournants selon la revendication 14, dans laquelle la partie signal (3a) peut être remplacée lorsque la partie puissance (3b) est installée dans la machine à plateaux tournants (1).
